(19) Europäisches Patentamt
European Patent Office
Office européen des brevets

(11) Publication number: **0 122 648**
**B1**

(12) **EUROPEAN PATENT SPECIFICATION**

(45) Date of publication of patent specification: **10.06.87**

(21) Application number: **84200368.3**

(22) Date of filing: **14.03.84**

(51) Int. Cl.$^4$: **C 08 G 18/14,** C 08 G 18/50, C 08 G 18/40, C 08 G 18/18, C 08 G 18/79

(54) **Method for the manufacture of urethane-modified isocyanurate foams.**

(30) Priority: **17.03.83 US 476184**
**02.08.83 US 519576**

(43) Date of publication of application:
**24.10.84 Bulletin 84/43**

(45) Publication of the grant of the patent:
**10.06.87 Bulletin 87/24**

(84) Designated Contracting States:
**BE DE FR GB IT NL SE**

(56) References cited:
**FR-A-2 319 421**
**GB-A-2 058 098**

(73) Proprietor: **AKZO N.V.**
**Velperweg 76**
**NL-6824 BM Arnhem (NL)**

(72) Inventor: **White, Kenneth B.**
**1212, W. Lunt**
**Chicago Illinois 60626 (US)**

(74) Representative: **Sieders, René et al**
**P.O. Box 314**
**NL-6800 AH Arnhem (NL)**

**EP 0 122 648 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention pertains to the formation of urethane-modified isucyanurate foams using mixtures of polyalkoxylated amines and polyalkoxylated quaternary ammonium borate esters as copolyols. More particularly this invention relates to the use of such copolyols to form foams having NCO/OH ratios of 1.5 to 3.5, using very inexpensive, commercially available resin polyols. A blend of these polyalkoxylated amines and polyalkoxylated quaternary ammonium borate esters with the aforesaid resin polyol and, optionally, a polyether or polyester polyol is very stable and will remain a homogeneous liquid without phase separation and without the need for agitation for at least 7 days after blending.

Urethane and polyisocyanate foams are manufactured using a blend of an isocyanate and a polyol. The molar ratio of isocyanate to polyol, that is, the ratio of NCO functional groups to OH functional groups, is known as "the index" or "NCO/OH ratio". Foams are manufactured with both isocyanates and polyols and when the molar ratio of isocyanate to polyol is between 1.05 to 1.15, a urethane foam is formed according to the reaction:

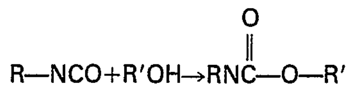

The urethane product shown above is the monomeric structural unit that combines to form the polyurethane foam. At an index between 1.5 and 3.5, a urethane-modified isocyanurate foam is formed. At indices above 4.1, an isocyanurate foam is formed having the monomeric unit:

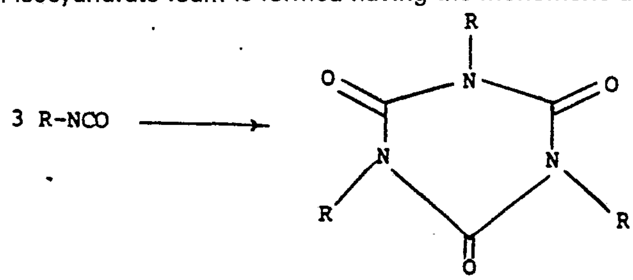

which may have a minority of urethane linkages. Herein, the terms isocyanurate and polyisocyanurate and the terms urethane and polyurethane in reference to foams will be used interchangably.

Currently, urethane-modified polyisocyanurate foams are manufactured using polyether or polyester polyols, as for example the Voranol® group of polyols available from Dow Chemical Company, Midland, Michigan. When combined with a catalyst, a surfactant, and a blowing agent, and then with an isocyanate in the known manner, these polyether or polyester polyols form a foam having good qualities. Certain resin polyols, such as the Terate® resin polyol available from Hercules, Incorporated, Wilmington, Delaware, the D 400 Polyol resin polyol available from Dixie Chemical Company, 10701 Bay Area Boulevard, Pasadena, Texas, and the Foamol 250 resin polyols available from Jim Walter Research Corporation, 10301 9th St. North, St. Petersburg, Florida, are of a hydroxyl number sufficient so as to theoretically permit their use in foam manufacture. In practice, however, these polyols have proved to be unacceptable at concentrations in excess of 40% (wt.) of the total polyol blend for use in manufacturing high quality urethane-modified polyisocyanurate foams. Because the resin polyols are about one-third less costly than the currently used conventional polyether or polyester polyols, it is desirable that a polyol blend be found that may be used with larger quantities of such resin polyols to result in a polyisocyanurate foam having acceptable properties and at a lower cost.

The present invention is a method for the manufacture of urethane-modified polyisocyanurate foams, comprising blending an isocyanate with a "B" side, the "B" side comprising a polyol blend, a surfactant, a blowing agent, and a catalyst. The polyol blend comprises:

a. at least 5% (wt.) of a mixture of a polyalkoxylated amine and a polyalkoxylated quaternary ammonium borate ester defined hereinafter

b. at least 40% (wt.) of a resin polyol, said resin polyol comprising at least 70% (wt.) of a combination of polymers and monomers having the general formula

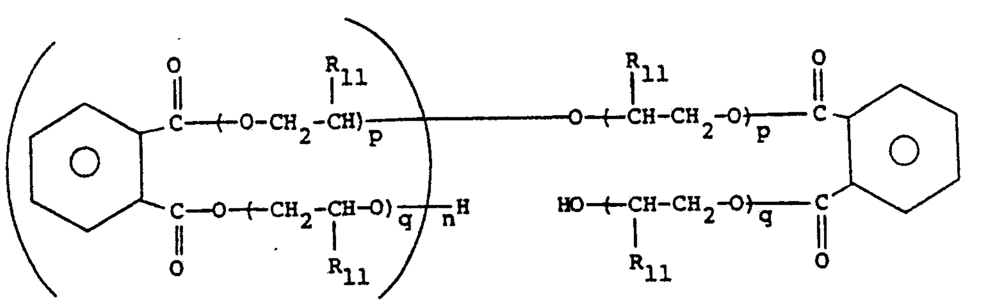

(I)

wherein n is from 0 to 50, $R_{11}$ is either H— or $CH_3$—, and p and q are each integers from 1 to 10; or at least 45% (wt.) of a resin polyol, said resin polyol either having the general formula

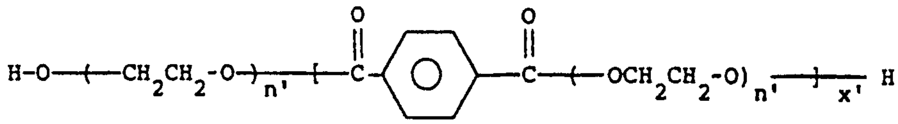

(II)

wherein n′ is either 1 or 2 and x′ is an integer from 1 to 20, inclusive; or having the general formula

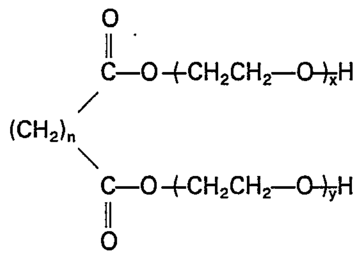

(III)

wherein n is an integer from 1 to 4 inclusive and x and y are integers each having a value of from 2 to 20, inclusive;

c. the remainder of said polyol blend being a polyether or polyester polyol.

All of the components of the "B" side may be blended and will thereafter remain a homogeneous liquid without phase separation and without the need for agitation for at least seven days.

In one embodiment of the invention the weight ratio of polyalkoxylated amine to polyalkoxylated quaternary ammonium borate ester is between 1:0.15 and 1:12.0 when use is made of resin polyol comprising at least 70% (wt.) of a compound having the general formula (I).

In another embodiment of the invention the weight ratio of polyalkoxylated amine to polyalkoxylated quaternary ammonium borate ester is between 1:0.15 and 1:4.1 when use is made of resin polyol having the general formula (II) or (III).

In yet another embodiment of the invention, the polyalkoxylated amine is selected from the group consisting of:

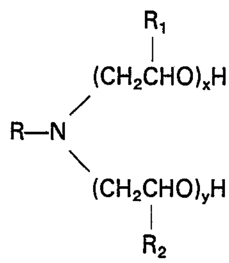

wherein R is selected from the group of alkyl radicals having between 1 and 18 carbon atoms, x and y are integers each having a value of at least one and wherein the sum of x and y does not exceed 50 and wherein $R_1$ and $R_2$ may be the same or different and may be selected from the groups consisting of H—, $CH_3$—, $C_1$—$C_{10}$ straight- or branched-chain alkyl or alkenyl radicals, a phenyl group, a benzyl group or halogenated alkyl group. In a most preferred polyalkoxylated amine, R corresponds to the tallow alkyl group, $R_1$ and $R_2$ are each H—, and x plus y equal 5. Hence, the preferred polyalkoxylated amine is a tallow pentaethoxylated amine.

The polyalkoxylated quaternary ammonium borate esters are of the general formula:

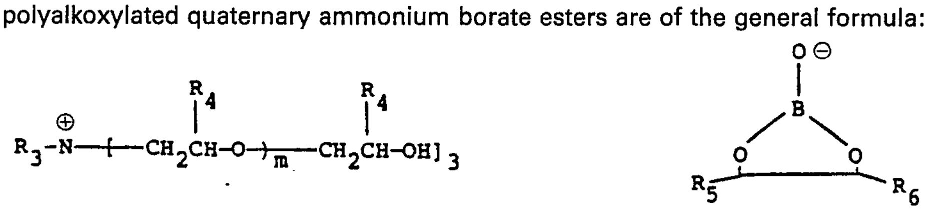

wherein $R_3$ is a straight- or branched-chain alkyl or alkenyl radical having from 1 to 30 carbon atoms, inclusive, or a phenyl or benzyl radical or a group $R_9$—O—$R_{10}$— where $R_9$ is a $C_{1-20}$ alkyl or alkoxy group and $R_{10}$ is a $C_{2-5}$ alkylene group; $R_4$ is H—, a $C_1$ to $C_{10}$ straight- or branched-chain alkyl or alkenyl radical, a phenyl group, a benzyl group, or a halogenated alkyl group; $R_5$ and $R_6$ are different or the same and are selected from the group including H—, or a $C_1$ to $C_{10}$ straight- or branched-chain alkyl or alkenyl radical, a phenyl group, or a benzyl group; and wherein m is an integer from 0 to 30, inclusive. Preferably, the

polyalkoxylated quaternary ammonium borate ester will include an $R_3$ that is a straight- or branched-chain alkyl or alkenyl radical having from 8 to 18 carbon atoms, and $R_4$, $R_5$, $R_6$ will be H—. The borate ester anion may alternatively include a $CH_3$— at the $R_6$ position. A most preferred quaternary ammonium borate ester has an m equal to 0 and an $R_3$ corresponding to the tallowalkyl ($C_{18}H_{37}$) radical.

In yet another embodiment of the present invention, the polyalkoxylated amine is selected from the group consisting of:

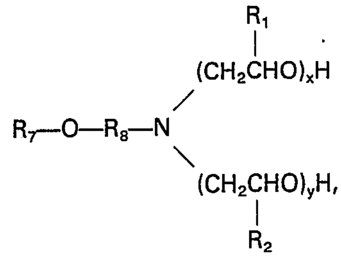

wherein $R_7$ is selected from the group of $C_1$—$C_{20}$ alkyl groups and $R_8$ is a $C_2$ to $C_5$ alkyl group; $R_1$ and $R_2$ are the same or different and may be selected from the groups consisting of H—, $CH_3$—, $C_1$ to $C_{10}$ straight- or branched-chain alkyl or alkenyl radicals, a phenyl group, a benzyl group, or a halogenated alkyl group; and x and y are integers each having a value of at least 1 and having a sum not exceeding 50.

The isocyanates may be selected from the groups including the organic polyisocyanates which are disclosed herein as useful in the production of conventionally manufactured polyisocyanurate foams. A preferred polyisocyanate is Mondur® MR, a polycyclic aromatic polyisocyanate available from the Mobay Chemical Corporation, Pittsburgh, Pennsylvania.

Present urethane-modified polyisocyanurate foams may be manufactured according to methods known in the art. These methods comprise blending two components, stirring, and allowing the blend to rise in an open container so as to form the desired foam. The two components are known as the "A" and "B" components, with the "A" component comprising the isocyanate and the "B" component comprising a blend of polyol, catalyst, surfactant, and blowing agent.

Catalysts may be selected from those conventionally used in the art, including metal salts, alkali metal salts, and tertiary amine trimerization catalysts. A preferred catalyst is potassium octanoate or potassiuim-2-ethylhexanoate. The present preferred catalyst is M & T — T 45 catalyst, which is 45% active potassium 2-ethylhexanoate and 55% polyethylene glycol having a molecular weight of 200, and which is available from M & T Chemicals Inc., Rahway, N.J., 07065. The amount of catalyst to be used will range from 0.01% to 2% of the total polyol blend weight. The blowing agent may be selected from the group including water, methylene chloride, or any of the fluorocarbons known to those skilled in the art which can be used for blowing polymer mixtures into cellular polymers. Generally speaking, such fluorocarbon blowing agents are fluorinated aliphatic hydrocarbons which may also be substituted by chlorine and/or bromine. A most preferred blowing agent is F'reon® 11A, a trifluorochloromethane produced by E.I. Du Pont de Nemours & Company, Wilmington, Delaware. Surfactants may likewise be chosen from among those known to the skilled in the art; a preferred surfactant is DC—193, a surfactant having silicon glycol copolymers with a direct silicon-carbon bonds, and sold by the Dow Corning Corporation, Midland, Michigan.

The present polyol blends may be obtained by mixing in a container the polyalkoxylated amine, polyalkoxylated quaternary ammonium borate ester, resin polyol, and optionally, the polyether or polyester polyol. The polyalkoxylated amines may include polyethoxylated or polypropoxylated amines, wherein the amines are tertiary amines having one fatty alkyl group derived from various fatty sources and two or more polyoxyethylene or polyoxypropylene groups attached to the nitrogen. Typical of these polyethoxylated or polypropoxylated amines are the Ethomeen® polyethoxylated amines available from the Armak Company, 300 S. Wacker Drive, Chicago, Illinois, 60606, preferably being of the general formula:

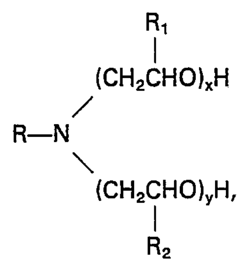

wherein R is selected from the group of alkyl radicals having from 1 to 18 carbon atoms, x and y are integers each having a value of one or more, the sum of x and y not exceeding 50; and wherein $R_1$ and $R_2$ may be the same or different, and may be selected from the groups consisting of H—, $CH_3$, $C_1$—$C_{10}$ straight- or branched-chain alkyl or alkenyl radicals, a phenyl group, a benzyl group or halogenated alkyl group.

Another preferred polyalkoxylated amine includes the compound Ethomeen® EA—80 polyethoxylated ether amine, which is manufactured by the combination of a $C_8$ and $C_{10}$ branched-chain alcohol and which is also available from the Armak Company, Chicago, Illinois. These preferred ether amines are selected from the group consisting of:

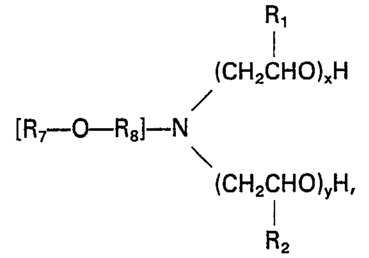

where $R_7$ is selected from the group of $C_1$—$C_{20}$ alkyl groups, and $R_8$ is a $C_2$ to $C_5$ alkyl group; $R_1$ and $R_2$ are the same or different and may be selected from the groups consisting of H—, $CH_3$—, $C_1$ to $C_{10}$ straight- or branched-chain alkyl or alkenyl radicals, a phenyl group, a benzyl group, or a halogenated alkyl group; and x and y are integers each having a value of at least 1 and having a sum not exceeding 50.

Also required for the polyol blend are polyalkoxylated quaternary ammonium borate esters. These compounds are of the general formula:

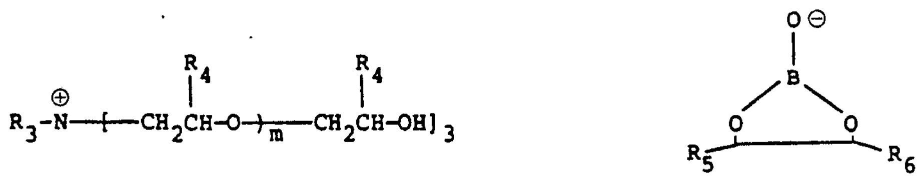

wherein $R_3$ is a straight- or branched-chain alkyl ojr alkenyl radical having from 1 to 30 carbon atoms, inclusive, or a phenyl or benzyl radical; $R_4$ is H—, a $C_1$ to $C_{10}$ straight- or branched-chain alkyl or alkenyl radical, a phenyl group, a benzyl group, or a halogenated alkyl group; $R_5$ and $R_6$ are different or the same and are selected from the group including H—, or a $C_1$ to $C_{10}$ straight- or branched-chain alkyl or alkenyl radical, a phenyl group, or a benzyl group; and wherein m is an integer from 0 to 30, inclusive. The cationic portion of the polyalkoxylated quaternary ammonium borate ester may also be selected from the group described by the general formula:

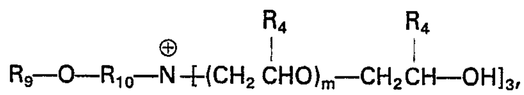

wherein m and $R_4$ are as defined hereinabove, $R_9$ is a $C_1$—$C_{20}$ alkyl or alkoxy group, and $R_{10}$ is a $C_2$ to $C_5$ alkylene group. Preferably, $R_{10}$ is a —$C_3H_6$— and $R_9$ is a combination of approximately equal amounts of $C_{12}$—$C_{15}$ alkyl group. In this specification, the cationic portion of the polyalkoxylated quaternary ammonium borate esters may be selected from either of the above two general formulae.

The polyol blend will comprise one of the resin polyols corresponding to either formula (I), (II) or (III) above. With respect to the resin polyol of which at least 70% by weight will be a compound having the general formula (I), at least 40% by weight of the polyol blend will comprise this resin polyol. Examples of these resin polyols include the Terate® 200 series resin polyols for rigid and semi-rigid polyurethane foam described in Bulletin OR—255 of Hercules, Inc., Wilmington, Delaware 19899, and the above formula (I) is believed to be an accurate structural representation of about 70% of the weight of the Terate® resin polyols. The Terate® resin polyols are general purpose, moderate viscosity, aromatic polyester polyols derived from polycarbomethoxy-substituted diphenyls, polyphenyls, and benzyl esters of the toluate family. The Terate® polyols are dark colored, highly polar liquids that are insoluble in aliphatic hydrocarbon solvents and water. Product grades and typical properties are as follows:

TABLE 1

| Product Grade | Viscosity at 25°C, cps | Hydroxyl Number | Acid Number as Carboxylic Acid | Water, Percent | Average Equivalent Weight |
|---|---|---|---|---|---|
| Terate® 202 | 1,900 | 440 | 4.5 | 0.1 | 127.5 |
| Terate® 203 | 19,000 | 315 | 5.1 | 0.1 | 178 |
| Terate® 204 | 13,000[a] | 275 | 6 | 0.1 | 204 |
| Terate® 211 | 18,000 | 540 | 3 | 0.1 | 104 |
| Terate® 213 | 30,000 | 315 | 3 | 0.1 | 178 |

[a]at 40°C

A most preferred Terate® resin polyol for use in the present invention is Terate® 203 resin polyol.

With respect to the resin polyols corresponding to either formula (II) or (III), at least 45%, and preferably up to 80%, by weight of the polyol blend will comprise one of them. Examples of these resin polyols are the D—400 Polyol and the Foamol 250 polyol mentioned hereinabove. The D—400 and the Foamol 250 resin polyols are dark coloured, highly polar liquids that are insoluble in aliphatic hydrocarbon solvents and water.

The remainder of the polyol blend, if the total polyol blend will not be limited to the polyalkoxylated amine, polyalkoxylated quaternary ammonium borate ester, and resin polyol, will be a conventional polyether or polyester polyol. These polylether or polyester polyols are well known in the art of polyurethane and polyisocyanurate foam manufacture, as for example the Voranol® polyether polyols manufactured by the Dow Chemical Company, Midland, Michigan. A most preferred polyether or polyester polyol is Voranol® 575.

The particular polyol blend in accordance with this invention is advantageous in that all of the components of the "B" side may be blended together with a polyol blend and the "B" side will thereafter remain a homogeneous liquid without phase separation and without the need for agitation for at least 7 days, and may still be used to manufacture a foam having excellent physical properties.

There are several criteria to be noted in determining whether a foam is of an acceptable quality. Of lesser importance is the tack free time, which is preferably about 60 seconds or less. Dimensional stability is more important, and the foam should not exceed 115% of its original dimensions after seven days. Dimensional stability is tested at two conditions: 70°C and 100% relative humidity; and 93°C and ambient humidity.

Another important criterion is the percentage of closed cells in the foam itself, with a minimum of 85% required. Finally, a percent friability, the loss of weight of the polyisocyanurate foam due to crumbling, is determined by the ASTM C 421 test. The friability of a foam is good if under 20% and excellent if under 10%.

The following examples will demonstrate the use of the present polyol blend in the manufacture of polyisocyanurate foams using low cost resin polyols. The first four examples pertain to the manufacture of the particular mixture of a polyalkoxylated amine and a polyalkoxylated quaternary ammonium borate ester. These mixtures are used in this invention in an amount comprising at least 5% (wt.) of the polyol blend.

Example 1

304 grams of 1,2-propanediol (4.0 gram moles) are added to 124 grams of boric acid (2.0 gram moles) in a one-liter, three neck flask equipped with a heating mantle, A Dean-Stark trap, and a condenser. The mixture is heated to 128°C at atmospheric pressure, and retained at that temperature and pressure for about 34 1/2 hours, during which time 44.5 grams of water was stripped from the mixture. A water aspirator is then started to create a slight vacuum at the condenser, and another 65.0 grams of water is stripped from the mixture during the next 5 3/4 hours. The total water removed (109.5 grams) corresponds to the stoichiometric amount, but analysis of the borate ester adduct remaining in the flask showed that it contained 3.4% water.

40 grams (0.25 gram moles) of the borate ester formed are added to 262 grams (1.0 gram mole) of Armeen® TM 97 aliphatic amine, so as to obtain a 1:0.25 ratio of amine to borate ester, and 58.1 grams diethylene glycol, a solvent. After heating the reaction mixture to 75°C, 121.0 grams (2.75 gram moles) of ethylene oxide are added thereto over the next 2 1/2 hours. Analysis of the resulting mixture showed a

blend containing 45.4% free amine and 36.7% of a quaternary ammonium propylene glycol borate ester having the formula:

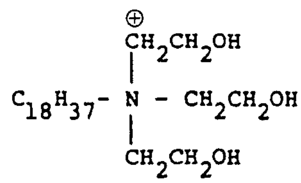

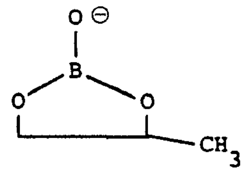

This formula corresponds to Armol® 101B—3 polyethoxylated amine/amonium borate ester blend.

Example 2

A 100 gallon Monel reactor was charged with 84 kg (0.71 mole) of Armeen® TM 97 aliphatic amine and 13.6 kg of diethylene glycol, and the mixture was heated to 65°C. Over a two hour period, 38.5 kg (0.53 mole) of the bis-propylene glycol borate ester described in Example 1 was pumped into the reactor, causing the temperature to rise to 80°C. After cooling to 75°C, 60 kg (3.02 mole) of ethylene oxide was added over a period of two hours and 42 minutes. During this time the total reactor pressure was not allowed to exceed 3.6 bar and the temperature was maintained at 95°C. The mixture was allowed to digest for another 2 hours and 40 minutes, where upon analysis showed 1.317 meq/g of quat and 0.307 meq/g of free amine and 0.3% $H_2O$. The reactor was purged with a stream of nitrogen at 75—85°C for 4 hours and an additional 6 hours at 100°C. Analysis showed 0.11% $H_2O$. This is Armol 101B—1.

12.6 kg of the 101B—1 and 48.6 kgs. Ethomeen® T/15 were mixed in a 30 gallon Pfaudler reactor at 70°C. Water was removed from the blend by sparging with a stream of nitrogen at 70°C at 27" Hg vacuum over a 5 1/2 hour period. Analysis after this time showed; quat 0.238 meq/g, free amines 1.779 meq/g, pH (10% in $H_2O$) 10.9, $H_2O < 0.1\%$ and OH value 318. This product corresponds to Armol® 201B—125 amine/ammonium borate ester blend.

Example 3

17.7 kg or Armol® 101B—1 amine/ammonium borate ester blend and 43.5 kg of Ethomeen® T/15 ethoxylated amines was blended at 70°C in a 30 gallon Pfaudler reactor. Water was removed by sparging with a stream of nitrogen at 70°C, 27" Hg vacuum over 5 hours. Analysis showed; quat 0.331 meq/g, free amine 1.650 meq/g, pH (10% in water) 10.9, $H_2O < 0.1\%$, OH value 332. This product corresponds to Armol® 201B—135 amine/ammonium borate ester blend.

Armol® 201B—145, Armol® 201B—155 and Armol® 201B—175 amine/ammonium borate ester blend are manufactured in the manner described above using Armol® 101B—1: Ethomeen® T/15 ratios of 4.8:8.2, 5.9:7.1 and 9.3:5.7, respectively.

Example 4

304 grams of 1,2-propane diol (4.0 gram moles) are added to 124 grams of boric acid (2.0 gram moles) in a one-liter, three neck flask equipped with a heating mantle, a Dean Stark trap, and a condenser. The mixture is heated to 128°C at atmospheric pressure, and retained there for about 3 1/2 hours, during which time about 44.5 grams of water are stripped from the mixture. A water aspirator is then started so as to create a slight vacuum at the condenser, and another 65.0 grams of water is stripped from the mixture during the next 5 3/4 hours. The total water removed of 109.5 grams corresponds to the stoichiometric amount, but analysis of the adduct remaining in the flask showed that it contained 3.4% water.

160 grams (1.0 gram mole) of this propylene glycol borate ester are added to 262 grams (1.0 gram mole) of Armeen® TMD aliphatic amine and 134 grams (1.0 gram mole) of dipropylene glycol, a solvent. The reactor in which these reactants are blended is communicative with an ethylene oxide reservoir through a stainless steel tube. Four moles of ethylene oxide, pressurized in its reservoir by nitrogen, are slowly added to the reactor over the next 8 1/2 hours, and the resulting quaternary is represented by the formula:

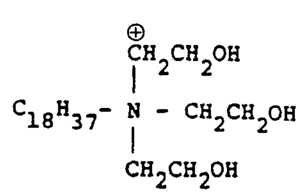

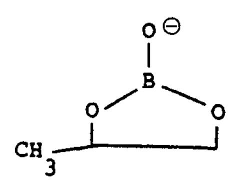

(IV)

The product formed in the above ethoxylation comprises 48.6% of the ethoxylated quaternary ammonium borate ester shown above and 10.3% free amine, and corresponds to Armol® 101B—4 amine/quaternary ammonium borate ester.

Armol® 101B—2 quaternary ammonium borate ester may be manufactured by adding 75 grams (0.469 gram moles) of the propylene glycol borate ester described in the first paragraph of this example to 246 grams (0.939 gram mles) Armeen® TM—97, and 35 grams of diethylene glycol, and then ethoxylating this blend with 144 grams (4.0 gram moles) of ethylene oxide in the manner described in the second paragraph of this example. The ratios of free amine to quaternary in the presently used amine/quaternary ammonium borate ester blend are as follows:

| Amine/quaternary ammonium borate ester blend | | Ratio, free amines: quat |
|---|---|---|
| Armol® | 101B—1 | 1:4.06 |
| | 101B—2 | 1:1.51 |
| | 101B—3 | 1:0.54 |
| | 101B—4 | 1:11.6 |
| Armol® | 201B—125 | 1:0.15 |
| | 201B—135 | 1:0.23 |
| | 201B—145 | 1:0.35 |
| | 201B—155 | 1:0.49 |
| | 201B—175 | 1:0.86 |

Example 5

A urethane-modified polyisocyanurate foam was manufactured by blending 170.3 grams of Mondur® MR with a "B" side comprising 20 grams of Armol® 201B—125, 67.5 grams Terate 203, 12.5 grams Voranol 575, 2.5 grams Dow Corning DC—193, and 41 grams Freon® 11A. The resulting foam had a cream time of 24 seconds, a gel time of 46 seconds, a tack free time of 69 seconds, a density of 0.033 gram per cc., a 1.21% friability, 88.3% closed cells, was at 109.41% of its original dimensions after seven days at 70°C and 100% relative humidity, and was at 106.81% of its original dimensions after seven days at 93°C and the ambient relative humidity.

Examples 6—9

Urethane-modified diisocyanurate foams were manufactured in substantially the same manner set forth in Example 5, except that instead of Armol® 201B—125, other amine/quaternary ammonium borate ester blends were used in accordance with the data in Table 2 below. The reaction profile, densities, percent closed cells, and percent friability are also shown in Table 2.

Example 10 and 11

Urethane-modified polyisocyanurate foams were prepared by blending 20 grams of a amine/ammonium borate ester blend with Terate® 203. The particular amine/quaternary ammonium borate ester blend used and the reaction profiles and physical properties of the foams manufactured are disclosed in Table 3 below.

Examples 12—14

In the following examples, the "B" side, comprising the polyol blend, a surfactant, a blowing agent, and a catalyst were blended and allowed to stand without agitation for seven days. At the end of the seven days, the blends were observed to determine whether they had remained homogeneous. Non-homogeneity, or phase separation of the "B" sides, which were stored in a sealed one-pint jar on a shelf, could be easily determined by viewing the blend. Upon phase separation, the "B" side would be seen to contain separate and distinct layers. The results are listed in Table 4; those samples showing homogeneity are indicated by the word "yes" in the row entitled "One Week Stability".

Example 15

This example is substantially similar to Examples 12—14, except that here the "B" side contain no polyester or polyether polyol and no catalyst. Instead, the "B" side contain 20 grams of Armol® 201B—125 and 80 grams of Terate® 203 as the polyol blend, and 38.5 grams of Freon 11A. The blend remained in a stable and homogeneous form for seven days without agitation.

Examples 16 and 17

Urethane-modified polyisocyanurate foams were manufactured in substantially the same manner as set forth in Example 5, except that instead of Armol® 201B—125, Armol®101B—1 and Armol® 201B—135 were used in accordance with the data in Table 5 below. The reaction profile, densities, percent closed cells and percent friability are also shown in Table 5. The "B" sides used in the manufacture of Examples 16 and 17, like the "B" sides used in the manufacture of all of the previous foams in Examples 5—15, pass the seven day stability test.

TABLE 2

| | | Example 6 | Example 7 | Example 8 | Example 9 |
|---|---|---|---|---|---|
| Armol 201B—135 | | 17.5 | — | — | — |
| Armol 201B—145 | | — | 15 | — | — |
| Armol 201B—155 | | — | — | 15.0 | — |
| Armol 201B—175 | | — | — | — | 15 |
| Terate 203 | | 67.5 | 67.5 | 67.5 | 67.5 |
| Voranol 575 | | 15 | 17.5 | 17.5 | 17.5 |
| DC—193 | | 2.5 | 2.5 | 2.5 | 2.5 |
| Freon 11A | | 42 | 43 | 43 | 41.5 |
| Mondur MR | | 175.2 | 180.6 | 182.6 | 186.6 |
| NCO/OH Ratio | | 2.0 | 2.0 | 2.0 | 2.0 |
| Reaction Profile (Min:Sec) | | | | | |
| Cream Time | | 0:25 | 0:29 | 0:27 | 0:19 |
| Gel Time | | 0:43 | 0:49 | 0:43 | 0:29 |
| Tack Free Time | | 1:03 | 1:18 | 0:58 | 0:33 |
| Density (gram per cc.) | | 0.032 | 0.032 | 0.032 | 0.032 |
| Humid Aging, 70°C/100% RH, % change in volume | 1 day | 5.73 | 8.25 | 5.66 | 6.30 |
| | 7 days | 7.06 | 10.05 | 6.70 | 6.71 |
| Dry Aging, 93°C/ambient RH, % change in volume | 1 day | 1.69 | 1.71 | 0.72 | 1.89 |
| | 7 days | 3.39 | 3.50 | 2.01 | 3.23 |
| % Closed Cells | | 93.3 | 90.4 | 90.9 | 92.8 |
| % Friability | | 0.9 | 1.95 | 0.62 | 0 |

TABLE 3

| | | Example 10 | Example 11 |
|---|---|---|---|
| Armol 201B—125 | | 20 | — |
| Armol 201B—135 | | — | 20 |
| Terate 203 | | 80 | 80 |
| DC—193 | | 2.5 | 2.5 |
| Freon 11A | | 38.5 | 38.5 |
| Mondur MR | | 151.3 | 152.6 |
| NCO%OH Ratio | | 2.0 | 2.0 |
| Reaction Profile (Min:Sec) | | | |
| Cream Time | | 0:24 | 0:19 |
| Gel Time | | 0:50 | 0:34 |
| Tack Free Time | | 1:23 | 0:53 |
| Density (gram per cc.) | | 0.033 | 0.033 |
| Humid Aging, 70°C/100% RH, % change in volume | 1 day | 16.77 | 6.99 |
| | 7 days | 18.27 | 8.54 |
| Dry Aging, 93°C/ambient RH, % change in volume | 1 day | 3.84 | 3.44 |
| | 7 days | 6.72 | 5.73 |
| % Closed Cells | | 92.7 | 92.7 |
| % Friability | | 1.1 | 0.1 |

TABLE 4

| | Example 12 | Example 13 | Example 14 |
|---|---|---|---|
| Armol 101B—1 | 10 | — | — |
| Armol 101B—2 | — | 10 | — |
| Armol 201B—125 | — | — | 10 |
| Terate 203 | 45 | 45 | 45 |
| Voranol 575 | 45 | 45 | 45 |
| DC—193 | 2.5 | 2.5 | 2.5 |
| T—45 | 0.5 | 0.5 | 0.5 |
| Freon 11A | 50.5 | 48 | 48 |
| One Week Stability | YES | YES | YES |

TABLE 5

| | | Example 16 | Example 17 |
|---|---|---|---|
| Armol 101B—1 | | — | 15.0 |
| Armol 201B—135 | | 10.0 | — |
| Terate 203 | | 45.0 | 67.5 |
| Voranol 575 | | 45.0 | 17.5 |
| T—45 | | 0.5 | 0.5 |
| DC—193 | | 2.5 | 2.5 |
| Freon 11A | | 57 | 60.0 |
| Mondur MR | | 275 | 293.6 |
| NCO/OH Ratio | | 2.50 | 3.0 |
| Reaction Profile (Min:Sec) | | | |
| Cream Time | | 0:36 | 0:17 |
| Gel Time | | 1:13 | 0:21 |
| Tack Free Time | | 1:48 | 0:25 |
| Density (gram per cc.) | | 0.028 | 0.031 |
| Humid Aging, 70°C/100% RH, % change in volume | 1 day<br>7 days | 5.1<br>4.9 | 4.9<br>5.7 |
| Dry Aging, 93°C/ambient RH, % change in volume | 1 day<br>7 days | 1.2<br>1.5 | 2.7<br>3.7 |
| % Closed Cells | | 85.0 | 90.7 |
| % Friability | | 5.2 | 1.7 |

Example 18

A urethane-modified polyisocyanurate foam with an index of 3.0 was manufactured by blending 302 grams of Mondur MR with a "B" side comprising 17.5 grams of Armol 201B—135, 67.5 grams Foamol 250, 15.0 grams Voranol 575, 2.5 grams Down Corning DC—193, and 61.0 grams Freon 11A. The resulting foam had a cream time of 24 seconds, a gel time of 41 seconds, a tack free time of 85 seconds, a density of 0.029 gram per cc., a 3.2% friability, 92.8% closed cells, was at 105.75% of its original dimensions after seven days at 70°C and 100% relative humidity, and was at 104.96% of its original dimensions after seven days at 93°C and the ambient relative humidity.

Example 19—23

Urethane-modified polyisocyanurate foams were manufactured in substantially the same manner set forth in Example 18, but at different indexes and frequently using Armol 201B—125 instead of Armol 201B—135. The reaction profiles, densities, percent closed cells, and percent friabilities are shown in Table 6.

Examples 24—27

Urethane-modified polyisocyanurate foams were prepared in substantially the same manner set forth in Examples 18—23 but using the aforementioned D—400 resin polyol instead of Foamol 250. The particular amine/quaternary ammonium borate ester blend used and the reaction profiles and physical properties of the foams manufactured and disclosed in Table 7 below.

TABLE 6

| | | Example 19 | Example 20 | | | |
|---|---|---|---|---|---|---|
| Armol 201B—135 | | — | — | — | — | 17.5 |
| Armol 201B—125 | | 17.5 | 20.0 | 20.0 | 17.5 | — |
| Foamol 250 | | 67.5 | 80.0 | 80.0 | 67.5 | 67.5 |
| Voranol 575 | | 15 | — | — | 15.0 | 15.0 |
| DC—193 | | 2.5 | 2.5 | 2.5 | 2.5 | 2.5 |
| T—45 | | 2.0 | 0.7 | 0.5 | 0.6 | 0.9 |
| Freon 11A | | 68.5 | 63.5 | 56.5 | 61.0 | 68.5 |
| Mondur MR | | 350.2 | 318.9 | 273.3 | 300.2 | 352.3 |
| NCO/OH Ratio | | 3.5 | 3.5 | 3.0 | 3.0 | 3.5 |
| Reaction Profile (Min:Sec) | | | | | | |
| Cream Time | | 0:20 | 0:15 | 0:15 | 0:29 | 0:23 |
| Gel Time | | 0:36 | 0:31 | 0:29 | 0:51 | 0:43 |
| Tack Free Time | | 1:08 | 2:15 | 1:10 | 1:38 | 2:00 |
| Density (gram per cc.) | | 0.029 | 0.030 | 0.030 | 0.028 | 0.029 |
| Humid Aging, 70°C/100% RH, % change in volume | 1 day | 3.79 | 7.42 | 6.39 | 5.83 | 3.57 |
| | 7 days | 6.77 | 8.86 | 8.00 | 7.38 | 4.82 |
| Dry Aging, 93°C/ambient RH, % change in volume | 1 day | 2.98 | 2.36 | 2.05 | 1.37 | 3.13 |
| | 7 days | 4.75 | 3.28 | 3.04 | 3.51 | 4.23 |
| % Closed Cells | | 87.3 | 91.7 | 92.3 | 85.0 | 90.1 |
| % Friability | | 25.5 | 2.6 | 3.2 | 13.3 | 18.9 |

TABLE 7

| | | Example 24 | Example 25 |
|---|---|---|---|
| Armol 201B—125 | | 17.5 | — |
| Armol 201B—135 | | — | 17.5 |
| D—400 resin polyol | | 67.5 | 67.5 |
| Voranol 575 | | 15.0 | 15.0 |
| DC—193 | | 2.5 | 2.5 |
| T—45 | | 0.7 | 0.7 |
| Freon 11A | | 51.5 | 51.5 |
| Mondur MR | | 237.1 | 238.9 |
| NCO/OH Ratio | | 3.0 | 3.0 |
| Reaction Profile (Min:Sec) | | | |
| Cream Time | | 0.15 | 0:15 |
| Gel Time | | 0:29 | 0:29 |
| Tack Free Time | | 0:38 | 0:35 |
| Density (gram per cc.) | | 0.029 | 0.031 |
| Humid Aging, 70°C/100% RH, % change in volume | 1 day<br>7 days | 5.23<br>6.52 | 5.11<br>6.24 |
| Dry Aging, 93°C/ambient RH, % change in volume | 1 day<br>7 days | 3.09<br>5.33 | 5.07<br>6.72 |
| % Closed Cells | | 86.2 | 86.76 |
| % Friability | | 9.4 | 6.5 |

TABLE 7 (cont.)

| | | Example 26 | Example 27 |
|---|---|---|---|
| Armol 201B—125 | | — | 17.5 |
| Armol 201B—135 | | 17.5 | — |
| D—400 resin polyol | | 67.5 | 67.5 |
| Voranol 575 | | 15.0 | 15.0 |
| DC—193 | | 2.5 | 2.5 |
| T—45 | | 0.9 | 1.5 |
| Freon 11A | | 57.5 | 57.5 |
| Mondur MR | | 278.7 | 276.6 |
| NCO/OH Ratio | | 3.5 | 3.5 |
| Reaction Profile (Min:Sec) | | | |
| Cream Time | | 0:25 | 0:26 |
| Gel Time | | 0:43 | 0:54 |
| Tack Free Time | | 1:15 | 2:30 |
| Density (gram per cc.) | | 0.033 | 0.029 |
| Humid Aging, 70°C/100% RH, % change in volume | 1 day | 6.85 | 5.50 |
| | 7 days | 8.94 | 5.92 |
| Dry Aging, 93°C/ambient RH, % change in volume | 1 day | 3.61 | 2.01 |
| | 7 days | 5.29 | 4.44 |
| % Closed Cells | | 90.6 | 84.5 |
| % Friability | | 3.5 | 19.1 |

**Claims**

1. A method for the manufacture of urethane-modified polyisocyanurate foams, comprising blending an isocyanate with a "B" side, said "B" side comprising a polyol blend, a surfactant, a blowing agent, and a catalyst, said polyol blend comprising:

a. at least 5% (wt.) of a mixture of a polyalkoxylated amine and a polyalkoxylated quaternary ammonium borate ester of the general formula:

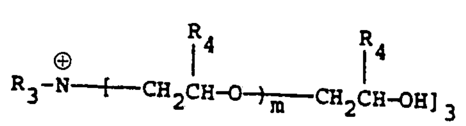

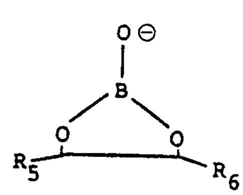

wherein $R_3$ is a straight- or branched-chain alkyl or alkenyl radical having from 1 to 30 carbon atoms, inclusive, or a phenyl or benzyl radical, or a group $R_9$—O—$R_{10}$ wherein $R_9$ is a $C_1$—$C_{20}$ alkyl or alkoxy group, and $R_{10}$ is a $C_2$ to $C_5$ alkylene group;

$R_4$ is H—, a $C_1$ to $C_{10}$ straight- or branched-chain alkyl or alkenyl radical, a phenyl group, a benzyl group, or a halogenated alkyl group; $R_5$ and $R_6$ are different or the same and are selected from the groups H—, or a $C_1$ to $C_{10}$ straight- or branched chain alkyl or alkenyl radical, a phenyl group, or a benzyl group; and wherein m is an integer from 0 to 30, inclusive.

b. at least 40% (wt.) of a resin polyol, said resin polyol comprising at least 70% (wt.) of a combination of polymers and monomers having the general formula:

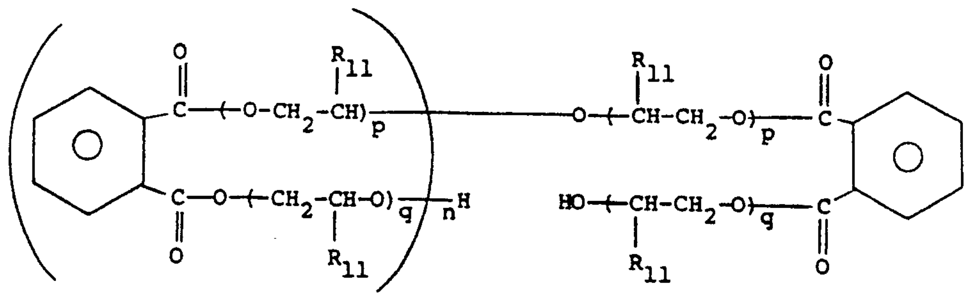

(I)

wherein n is from 0 to 50, $R_{11}$ is either H— or $CH_3$—, and p and q are each integers from 1 to 10; or at least 45% (wt.) of a resin polyol, said resin polyol either having the general formula

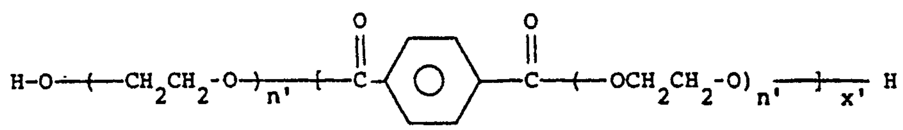

(II)

wherein n' is either 1 or 2 and x' is an integer from 1 to 20, inclusive or having the general formula

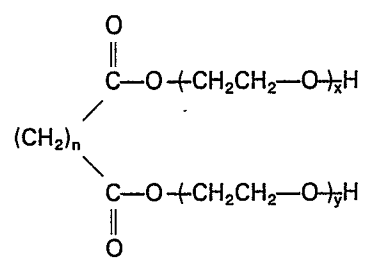

(III)

wherein n is an integer from 1 to 4 inclusive and x and y are integers each having a value of from 2 to 20, inclusive;

c. the remainder of said polyol blend being a polyether or polyester polyol.

2. Method as set forth in claim 1 wherein the weight ratio of polyalkoxylated amine to polyalkoxylated quaternary ammonium borate is from 1:0.15 to 1:12.0 when use is made of a resin polyol comprising at least 70% (wt.) of a compound having the general formula (I).

3. Method as set forth in claim 1 wherein the weight ratio of polyalkoxylated amine to polyalkoxylated quaternary ammonium borate ester is from 1:0.15 to 1:4.1 when use is made of a resin polyol having the general formula (II) or (III).

4. The method as set forth in claim 1, 2 or 3, wherein said polyalkoxylated amine is selected from the group consisting of

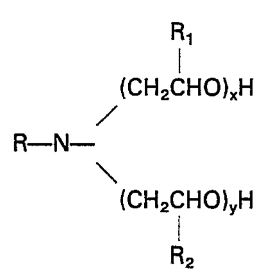

wherein R is selected from the group of alkyl radicals having from 1 to 18 carbon atoms, x and y are integers each having a value of at least one and wherein the sum of x and y does not exceed 50 and wherein $R_1$ and $R_2$ are the same or different and selected from the groups consisting of H—, $CH_3$—, $C_1$—$C_{10}$ straight- or branched-chain alkyl or alkenyl radicals, a phenyl group, a benzyl group or halogenated alkyl group.

5. The method as set forth in claium 4, wherein R is the tallow alkyl group, $R_1$ and $R_2$ are each H—, and wherein x plus y equal 5.

6. The method as set forth in claim 1, wherein $R_3$ is a straight- or branched-chain alkyl or alkenyl radical having from 8 to 18 carbon atoms, and $R_4$ is H—.

7. The method as set forth in claim 1, wherein $R_5$ and $R_6$ are H—.

8. The method as set forth in claim 1, wherein $R_5$ is H— and $R_6$ is $CH_3$—.

9. The method as set forth in claim 7 or 8, wherein m is 0.

10. The method as set forth in claim 9, wherein $R_3$ is $C_{18}H_{37}$—.

11. The method as set forth in claim 1, 2 or 3, wherein said polyalkoxylated amine is selected from the group consisting of

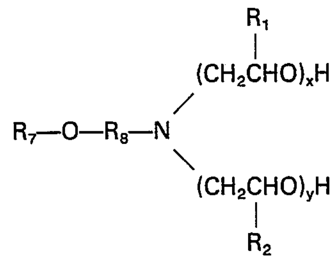

wherein $R_7$ is selected from the group of $C_1$—$C_{20}$ alkyl groups and $R_8$ is a $C_2$ to $C_5$ alkylene group; $R_1$ and $R_2$ are the same or different and selected from the groups consisting of H—, $CH_3$—, $C_1$ to $C_{10}$ straight- or branched-chain alkyl or alkenyl radicals, a phenyl group, a benzyl group, or a halogenated alkyl group; and x and y are integers each having a value of at least 1 and a sum not exceeding 50.

**Patentansprüche**

1. Ein Verfahren zur Herstellung von mit Urethan modifizierten Polyisocyanurat-Schäumen, umfassend das Vermischen eines Isocyanats mit einer "B"-Seite, wobei diese "B"-Seite eine Polyol-Mischung, ein oberflächenaktives Mittel, ein Treibmittel und einen Katalysator enthält und die Polyol-Mischung umfaßt

a) mindestens 5% (Gewichtsprozent) einer Mischung aus einem polyalkoxylierten Amin und einem polyalkoxylierten quartären Ammoniumboratester der allgemeinen Formel:

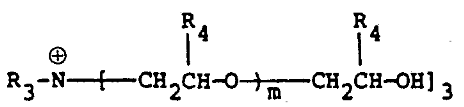

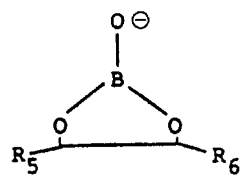

in welcher $R_3$ ein gerad- oder verzweigtkettiger Alkyl- oder Alkenylrest ist mit 1 bis einschließlich 30 Kohlenstoffatomen, oder ein Phenyl- oder Benzylrest oder eine $R_9$—O—$R_{10}$-Gruppe, wobei $R_9$ eine $C_1$—$C_{20}$-Alkyl- oder -Alkoxygruppe darstellt, und $R_{10}$ eine $C_2$—$C_5$-Alkylengruppe bedeutet;

$R_4$ Wasserstoff, eine gerad- oder verzweigtkettige $C_1$—$C_{10}$-Alkyl- oder -Alkenylgruppe, eine Phenylgruppe, eine Benzylgruppe oder eine halogenierte Alkylgruppe ist; $R_5$ und $R_6$ gleich oder verschieden sind und ausgewählt sind aus den folgenden Gruppen: Wasserstoff, eine gerad-oder verzweigtkettige $C_1$—$C_{10}$-Alkyl- oder -Alkenylgruppe, eine Phenylgruppe oder eine Benzylgruppe; und in welcher m eine ganze Zahl von 0 bis einschließlich 30 bedeutet.

b) mindestens 40% (Gewichtsprozent) eines Harz-Polyols, wobei dieses Harz-Polyol mindestens 70% (Gewichtsprozent) einer Kombination von Polymeren und Monomeren der allgemeinen Formel umfaßt:

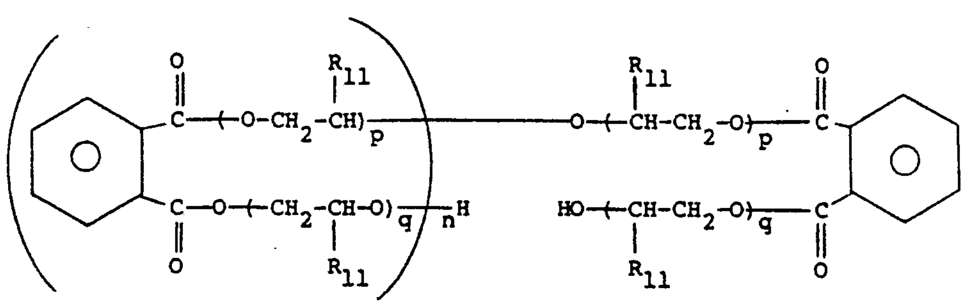

in welcher n einen Wert von 0 bis 50 darstellt, $R_{11}$ entweder ein H— oder $CH_3$-Rest ist und p und q jeweils ganze Zahlen von 1 bis 10 darstellen; oder mindestens 45% (Gewichtsprozent) eines Harz-Polyols, wobei dieses Harz-Polyol entweder die allgemeine Formel

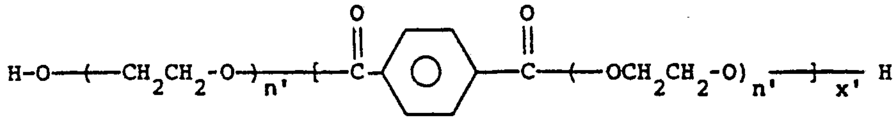

(II)

hat,

in welcher n' entweder 1 oder 2 ist und X' eine ganze Zahl von 1 bis einschließlich 20 darstellt, oder die allgemeine Formel

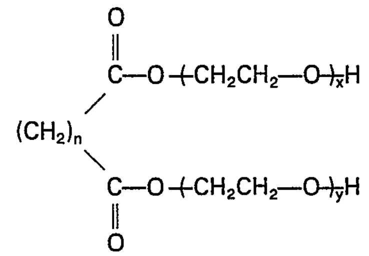

(III)

hat,

in welcher n eine ganze Zahl von 1 bis einschließlich 4 ist und x und y ganze Zahlen sind, deren jede einen Wert von 2 bis einschließlich 20 hat;

c) wobei der Rest dieser Polyolmischung ein Polyäther- oder Polyesterpolyol ist.

2. Verfahren wie in Anspruch 1 beanspruch, in welchem das Gewichtsverhältnis von polyalkoxyliertem Amin zu polyalkoxyliertem quartärem Ammoniumboratester im Bereich von 1:0,15 bis 1:12,0 liegt, wenn ein Harz-Polyol umfassend mindestens 70% (Gewichtsprozent) einer Verbindung der allgemeinen Formel (I) angewendet wird.

3. Verfahren wie in Anspruch 1 beanspruche, in welchem das Gewichtsverhältnis von polyalkoxyliertem Amin zu polyalkoxyliertem quartärem Ammoniumboratester im Bereich von 1:0,15 bis 1:4,1 liegt, wenn ein Harz-Polyol der allgemeinen Formel (II) oder (III) angewendet wird.

4. Das Verfahren wie in den Ansprüchen 1, 2 oder 3 beansprucht, in welchem das genannte polyalkoxylierte Amin ausgewählt ist aus der Gruppe bestehend aus

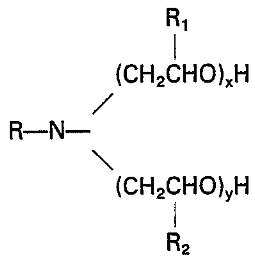

wobei R ausgewählt ist aus der Gruppe der Alkylreste mit 1 bis 18 Kohlenstoffatomen, x und y ganze Zahlen sind, deren jede einen Wert von mindestens 1 hat und in welcher die Summe von x und y einen Wert von 50 nicht überschreitet, und in welcher $R_1$ und $R_2$ gleich oder verschieden sind und ausgewählt sind aus den Gruppen bestehend aus Wasserstoff $CH_3$-Gruppe, geradkettigen oder verzweigtkettigen $C_1$—$C_{10}$— Alkyl- oder -Alkenylgruppen, einer Phenylgruppe, einer Benzylgrupe oder einer halogenierten Alkylgruppe.

5. Das Verfahren wie in Anspruch 4 beansprucht, in welcher R die aus Talg abgeleitete Alkylgruppe ist, $R_1$ und $R_2$ jeweils Wasserstoff bedeuten und x plus y den Wert 5 ergibt.

6. Das Verfahren wie in Anspruch 1 beansprucht, in welchem $R_3$ eine gerad- oder verzweigtkettige Alkyl- oder -Alkenylgruppe mit 8 bis 10 Kohlenstoffatomen ist und $R_4$ Wasserstoff ist.

7. Das Verfahren wie in Anspruch 1 beansprucht, in welchem $R_5$ und $R_6$ jeweils Wasserstoff darstellen.

8. Das Verfahren wie in Anspruch 1 beansprucht, in welchem $R_5$ Wasserstoff und $R_6$ eine $CH_3$-Gruppe ist.

9. Das Verfahren wie in den Ansprüchen 7 oder 8 beansprucht, in welchem m den Wert 0 hat.

10. Das Verfahren wie in Anspruch 9 beansprucht, in welchem $R_3$ eine $C_{18}H_{37}$-Gruppe ist.

11. Das Verfahren wie in den Ansprüchen 1, 2 oder 3 beansprucht, in welchem das genannte polyalkoxylierte Amin ausgewählt ist aus der Gruppe bestehend aus

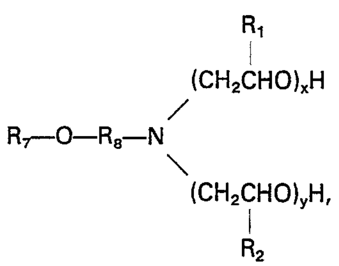

in welcher $R_7$ ausgewählt ist aus der Gruppe der $C_1$—$C_{20}$— Alkylreste und $R_8$ eine $C_2$- bis $C_5$-Alkylengruppe ist; $R_1$ und $R_2$ gleich oder verschieden sind und ausgewählt sind aus den Gruppen bestehend aus Wasserstoff, $CH_3$-Gruppe, geradkettigen oder verzweigtkettigen $C_1$- bis $C_{10}$-Alkyl- oder -Alkenylgruppen,

einer Phenylgruppe, einer Benzylgruppe oder einer halogenierten Alkylgruppe; und x und y ganze Zahlen sind, deren jede einen Wert von mindestens 1 hat und deren Summe einen Wert von 50 nicht überschreitet.

**Revendications**

1. Procédé pour préparer des mousses de polyisocyanurates modifiées par des groupes uréthannes, comprenant le mélangeage d'un isocyanate avec un côté "B", ledit côté "B" comprenant un mélange de polyols, un tensioactif, un agent de gonflement et un catalyseur, ledit mélange des polyols comprenant:

a) au moins 5% (en poids) d'un mélange d'une amine polyalcoxylée et d'un borate d'ammonium quaternaire, ester polyalcoxylé de formule générale:

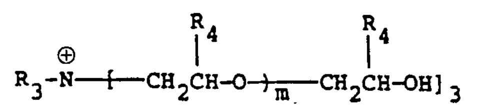

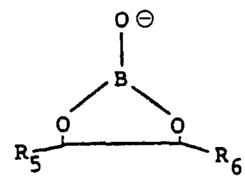

dans laquelle $R_3$ représente un radical alkyle ou alcényle linéaire ou ramifié ayant 1 à 30 atomes de carbone, inclusivement, ou un radical phényle ou benzyle ou un groupe $R_9$—O—$R_{10}$—, dans lequel $R_9$ représente un groupe alkyle ou alcoxy en $C_1$—$C_{20}$ et $R_{10}$ représente un groupe alkylène en $C_2$—$C_5$;

$R_4$ représente H—, un radical alkyl ou alcényle linéaire ou ramifié en $C_1$—$C_{10}$, un groupe phényle, un groupe benzyle ou un groupe alkyle halogéné; $R_5$ et $R_6$ sont identiques ou différents et sont choisis par H—, ou un radical alkyle ou alcényle linéaire ou ramifié en $C_1$—$C_{10}$, un groupe phényle ou un groupe benzyle; et m est un nombre entier valant 0 à 30, inclusivement;

b) au moins 40% (en poids d'un résine-polyol, ledit résine-polyol comprenant au moins 70% (en poids) d'une combinaison de polymères et de monomères répondant à la formule générale:

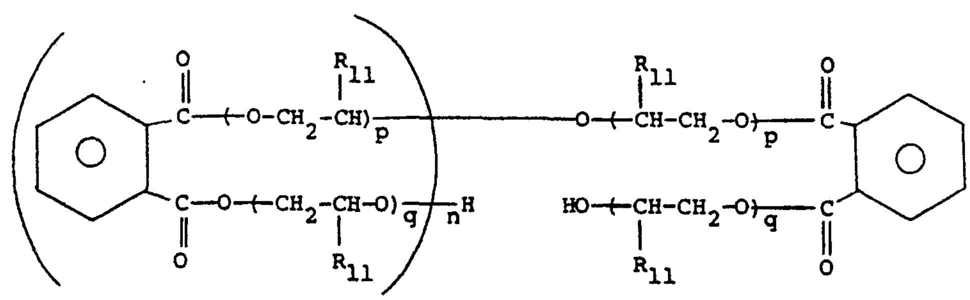

(I)

dans laquelle n vaut de 0 à 50, $R_{11}$ représente H— ou $CH_3$—, et p et q sont chacun des nombres entiers valant 1 à 10; ou au moins 45% (en poids) d'un résine-polyol, ledit résine-polyol répondant à la formule générale:

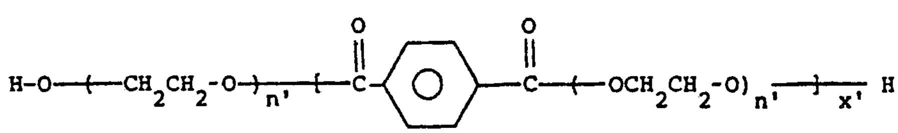

(II)

dans laquelle n' vaut 1 ou 2 et x' est un nombre entier valant 1 à 20, inclusivement, ou répondant à la formule générale

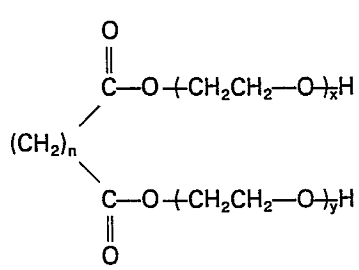

(III)

dans laquelle n est un nombre entier valant 1 à 4, inclusivement, et x et y sont des nombres entiers valant chacun 2 à 20, inclusivement;

c) le reste dudit mélange des polyols étant constitué par un polyéther-polyol ou un polyester-polyol.

2. Procédé selon la revendication 1, dans lequel le rapport pondéral de l'amine polyalcoxylée au borate d'ammonium quaternaire, ester polyalcoxylé, se situe entre 1:0,15 et 1:12,0 quand on utilise un résine-polyol comprenant au moins 70% (en poids) d'un composé répondant à la formule générale (I).

3. Procédé selon la revendication 1, dans lequel le rapport pondéral de l'amine polyalcoxylée au borate d'ammonium quaternaire, ester polyalcoxylé, se situe entre 1:0,15 et 1:4,1 quand on utilise un résine-polyol répondant à la formule générale (II) ou (III).

4. Procédé selon la revendication 1, 2 ou 3, dans lequel ladite amine polyalcoxylée est choisie dans l'ensemble constitué par

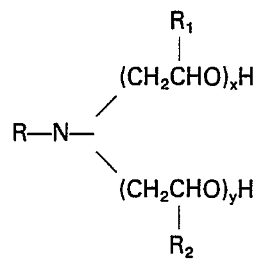

où R est choisi parmi les radicaux alkyles ayant 1 à 18 atomes de carbone, x et y sont des nombres entiers valant chacun au moins 1 et la somme de (x + y) n-excède pas 50; et $R_1$ et $R_2$ sont identiques ou différents et sont choisis parmi H—, $CH_3$—, les radicaux alkyles ou alcényles linéaires ou ramifiés en $C_1$—$C_{10}$, un group phényle, un groupe benzyl ou un groupe alkyle halogéné.

5. Procédé selon la revendication 4, dans lequel R est le groupe alkyle de suif, $R_1$ et $R_2$ représentent chacun H, et la somme (x + y) vaut 5.

6. Procédé selon la revendication 1, dans lequel $R_3$ représente un radical alkyle ou alcényle linéaire ou ramifié ayant 8 à 18 atomes de carbone, et $R_4$ représente H—.

7. Procédé selon la revendication 1, dans lequel $R_5$ et $R_6$ représente chacun H—.

8. Procédé selon la revendication 1, dans lequel $R_5$ représente H— et $R_6$ représente $CH_3$—.

9. Procédé selon la revendication 7 ou 8, dans lequel m est nul.

10. Procédé selon la revendication 9, dans lequel $R_3$ représente un groupe $C_{18}H_{37}$—.

11. Procédé selon la revendication 1, 2 ou 3, dans lequel ladite amine polyalcoxylée est choisie dans le groupe constitué par

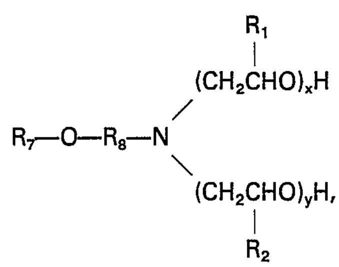

où $R_7$ est choisi parmi des groupes alkyles en $C_1$—$C_{20}$ et $R_8$ représente un groupe alkylène en $C_2$—$C_5$; $R_1$ et $R_2$ sont identiques ou différents et sont choisis parmi H—, $CH_3$—, des radicaux alkyles ou alcényles linéaires ou ramifiés en $C_1$—$C_{10}$, un groupe phényle, un groupe benzyle ou un groupe alkyle halogéné; et x et y sont des nombres entiers valant chacun au moins 1 et dont la somme n'excède pas 50.